# EUROPÄISCHE PATENTSCHRIFT

(11) **EP 3 026 512 B1**
(45) Veröffentlichungstag und Bekanntmachung des Hinweises auf die Patenterteilung: **10.01.2018**
(21) Anmeldenummer: 14195249.9
(22) Anmeldetag: 27.11.2014
(51) Int. Cl.: G05B 19/042

(54) **Verfahren zur Reduzierung des Energieverbrauchs einer Sicherheitssteuerung**
Method for reducing the energy consumption of a safety controller
Procédé pour réduire la consommation énergétique d'un contrôleur de sécurité

(43) Veröffentlichungstag der Anmeldung: 01.06.2016
(73) Patentinhaber: Wieland Electric GmbH, 96052 Bamberg (DE)
(72) Erfinder: Lindner, Andreas, 14656 Brieselang (DE)
(74) Vertreter: Tergau & Walkenhorst Patentanwälte PartGmbB

(56) Entgegenhaltungen:
- EP-A1- 2 590 036

## Beschreibung

Die Erfindung betrifft ein Verfahren zur Reduzierung des Energieverbrauchs einer Sicherheitssteuerung durch Beschaltung eines Stromkreises mit einer vorgegebenen Spannung in der Sicherheitssteuerung mit einer Steuereinheit mit einem Schalteingang und einem Schaltausgang, die mit dem Stromkreis verbunden sind, wobei die Spannung an dem Schalteingang an einer Vielzahl von Abtastzeitpunkten ermittelt wird.

Sicherheitssteuerungen, wie sie dem Fachmann beispielsweise aus der EP 2 590 036 A1 bekannt sind, werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge der Sicherheitssteuerung gesteuert, die zur Erfüllung der einschlägigen Sicherheitsvorschriften und -zertifizierungen ausgelegt sind. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von externen Schalteingängen und -ausgängen zur Beschaltung externer Stromkreise, z.B. zum Anschluss der Arbeitskontakte eines Meldeelements auf. Hierzu weist die Sicherheitssteuerung eine Steuereinheit auf, die interne Schalteingänge und - ausgänge aufweist, die entweder intern verschaltet sind oder die externen Schalteingänge und -ausgänge beschalten. Das Meldeelement kann z.B. ein Not-Aus-Schalter sein, eine Positions- oder Stellungsüberwachung z.B. einer Schutztür, eine Lichtschranke, eine Schaltmatte etc. Das Meldeelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Meldeelement nicht mehr in der Position "sicher" ist.

Sicherheitssteuerungen sind häufig auch modular aufgebaut, so dass mehrere, unterschiedlich geartete Meldeelemente angeschlossen werden können. Weiterhin können so auch mehrere elektrische Verbraucher gezielt angesteuert werden. Neben der Überwachung der Schaltstellung der Meldeelemente ist dabei eine ständige Funktionsüberprüfung der Sicherheitssteuerung erforderlich, um die genannten Sicherheitsnormen- und zertifizierungen zu erfüllen. Für besonders hohe Sicherheitsstufen umfasst dies neben der Prüfung der internen Stromkreise auch eine ständige Prüfung der Verkabelung der externen Stromkreise.

Diese Prüfung erfolgt üblicherweise durch Austastlücken in den von der Steuereinheit erzeugten logischen Signalen an den internen und externen Schaltausgängen. Bei zweiwertigen Logiken liegt an den Schaltausgängen entweder eine logische 1 oder eine logische 0 an, die durch bestimmte Spannungswerte unterschieden werden. So kann z.B. der logischen 1 eine Spannung von +24 V und der logischen 0 eine Erdung, d.h. 0 V zugewiesen sein. Um zu erkennen, dass die an den Schalteingängen gemessene Spannung tatsächlich auch von den Schaltausgängen der Sicherheitssteuerung stammt, wird die an den internen Schaltausgängen der Steuereinheit der Sicherheitssteuerung erzeugte Spannung mit regelmäßigen kurzen Austastlücken versehen, d.h. kurzen, definierten Pulsen niedrigerer Spannung, die die ansonsten bestehende, der logischen 1 entsprechende Spannung unterbrechen. Liegt ein Kabelfehler mit z.B. einem Querschluss zu einem anderen Kabel mit entsprechender Spannung vor, ist diese Austastlücke am Schalteingang nicht mehr feststellbar. Die Sicherheitssteuerung kann den Fehler des jeweiligigen internen oder externen Stromkreises daher am Fehlen der Austastlücken erkennen.

Moderne Sicherheitssteuerungen sind weiterhin üblicherweise digital aufgebaut. Die Signalverarbeitung erfolgt somit innerhalb eines Mikrocontrollers, dessen Programmierung in einem Speicher der Sicherheitssteuerung hinterlegt ist. Wesentlich bei der Digitaltechnik ist hierbei, dass die Verarbeitung in zeitdiskreten Schritten abläuft, d.h. der Mikrocontroller arbeitet mit einer bestimmten Taktfrequenz. Insbesondere die Auswertung der internen Schalteingänge der Steuereinheit und damit auch der externen Schalteingänge der Sicherheitssteuerung erfolgt damit zeitdiskret, d.h. zu bestimmten Abtastzeitpunkten, die jeweils auf einen Taktschritt fallen, wird ein A/D-Wandler angesprochen, der aus dem momentan am Schalteingang anliegenden analogen Spannungssignal ein digitales Signal ermittelt und dieses dem Mikrocontroller zur Weiterverarbeitung zur Verfügung stellt.

Nachteilig an den bekannten Sicherheitssteuerungen ist der Stromverbrauch insbesondere der zu überprüfenden externen Stromkreise. Beispielsweise erfordert ein dauerhaft mit 24 V beschalteter externer Stromkreis mit einer Stromaufnahme von 2 mA eine Leistung von 48 mW. Hinsichtlich der Kostenentwicklung auf dem Strommarkt ist es wünschenswert, die Energieverluste zu minimieren.

Es ist daher Aufgabe der Erfindung, ein Verfahren der eingangs genannten Art anzugeben, welches eine Reduzierung des Energieverbrauchs einer Sicherheitssteuerung ohne Einbußen hinsichtlich der Funktionalität oder Zuverlässigkeit ermöglicht.

Diese Aufgabe wird erfindungsgemäß gelöst, indem an dem Schaltausgang die vorgegebene Spannung innerhalb vorgegebener, jeweils einen der Abtastzeitpunkte umschließenden Zeitintervalle angelegt wird, und wobei außerhalb der Zeitintervalle eine geringere als die vorgegebene Spannung an dem Schaltausgang angelegt wird.

Die Erfindung geht dabei von der Überlegung aus, dass eine Reduzierung des Stromverbrauchs entweder durch eine Reduzierung der Verlustleistung (d.h. Reduzierung von Spannung oder Stromstärke) oder durch eine Reduzierung der Zeit, in der diese Leistung aufgenommen wird, möglich wäre. Hierbei wurde erkannt, dass die zeitdiskrete Arbeitsweise in einer digitalen Schaltung dazu genutzt werden kann, die Zeit, in der die Leistungsaufnahme erfolgt, zu minimieren: Es genügt hierbei nämlich, wenn die von der Steuereinheit der Sicherheitssteuerung an einem Schalteingang zu messende Spannung nur während des tatsächlichen, zeitdiskreten Abtastvorgangs anliegt. Es wird also ein Zeitintervall um einen Abtastzeitpunkt herum definiert, d.h. ein vorgegebener Zeitbereich vor und nach dem Abtastzeitpunkt, und durch eine entsprechende Programmierung der Steuereinheit Sicherheitssteuerung sichergestellt, dass die entsprechend erwartete Spannung am dem Schalteingang zugeordneten Schaltausgang während des Zeitintervalls am Schaltausgang anliegt. Am Abtastzeitpunkt liegt die Spannung damit am Schalteingang an. Außerhalb des Zeitintervalls wird die anliegende Spannung jedoch reduziert. Dieses Verfahren kann sowohl bei der Prüfung interner Stromkreise verwendet werden, als auch bei der Prüfung externer Stromkreise. Im letzteren Fall liegt die entsprechende Spannungsform dementsprechend neben den internen auch an den jeweils zugeordneten externen Schaltausgängen an. Dadurch ergibt sich eine Reduktion der Leistungsaufnahme des Stromkreises in den für die Abtastung irrelevanten Zeiträumen.

Eine maximale Energieersparnis ergibt sich dabei, wenn vorteilhafterweise außerhalb der Zeitintervalle keine Spannung an dem Schaltausgang angelegt wird. Mit anderen Worten: Außerhalb der für die Abtastung festgelegten Intervalle werden die einem Stromkreis zugeordneten Schaltein- und -ausgänge auf ein gemeinsames Potential gelegt, d.h. spannungsfrei geschaltet. Dadurch reduziert sich die Leistungsaufnahme außerhalb der abtastrelevanten Zeitintervalle auf 0 W.

In vorteilhafter Ausgestaltung umfasst der Stromkreis, dem der jeweilige Schaltein- und -ausgang zugeordnet ist, ein Meldeelement. Gerade Stromkreise zur Überprüfung des Betätigungszustands von Meldeelementen müssen während des gesamten Betriebs der Sicherheitssteuerung permanent überprüft werden, so dass hier besonderes Potential hinsichtlich der Energieersparnis liegt.

In vorteilhafter Ausgestaltung des Verfahrens betragen die Zeitintervalle, in denen die Spannung an den Schaltausgängen voll angelegt wird, 70% oder weniger, vorzugsweise 40% oder weniger des mittleren Zeitabstands zwischen zwei Abtastzeitpunkten. Unter dem mittleren Zeitabstand wird der über die gesamte Betriebsdauer gemittelte Zeitabstand oder aber ein gleitender Mittelwert des Zeitabstands von Abtastzeitpunkt zu Abtastzeitpunkt verstanden. Durch eine Festlegung der Zeitintervalle auf 70% oder sogar 40% dieses Mittels wird eine mittlere Energieersparnis von 70% bzw. 40% erzielt, sofern die Spannung außerhalb dieser Zeitintervalle auf 0 reduziert wird.

Das bislang beschriebene Verfahren ermöglicht weiterhin in einfacher Weise eine Integration der eingangs beschriebenen Austastlücken zur Prüfung der externen Stromkreise: Hierzu wird vorteilhafterweise zu einem Testabtastzeitpunkt zwischen zwei Abtastzeitpunkten die Spannung an dem Schalteingang ermittelt, wobei innerhalb eines vorgegebenen Testzeitintervalls keine Spannung an dem jeweils zugeordneten Schaltausgang angelegt wird. Mit anderen Worten: Die Abtastzeitpunkte, zu denen die Spannung am jeweiligen Schaltausgang auf 0 gesetzt wird, und auch am Schalteingang eine Spannung von 0 erwartet wird, werden zeitlich zwischen die bereits beschriebenen Abtastzeitpunkte gelegt. Für die genaue zeitliche Anordnung gibt es dabei mehrere Alternativen:

Zunächst könnten die gewöhnlichen, bereits beschriebenen Abtastzeitpunkte zeitlich regelmäßig beabstandet sein und die Testabtastzeitpunkte werden zwischen den Abtastzeitpunkten angeordnet. Die Testabtastzeitpunkte würden bei einer zeitlich mittigen Anordnung zwischen jeweils zwei Abtastzeitpunkten somit automatisch zwischen in die spannungsfreie Zeit zwischen zwei der Zeitintervalle fallen und es wäre damit automatisch sichergestellt, dass zum Testabtastzeitpunkt keine Spannung anliegt.

In vorteilhafter Ausgestaltung könnten Abtastzeitpunkte oder Testabtastzeitpunkte auch jeweils den gleichen Zeitabstand aufweisen. Das heißt, es werden regelmäßig beabstandete Zeitpunkte definiert, die beispielsweise an die Taktfrequenz des Mikrocontrollers gekoppelt sind, und in regelmäßigem Muster werden Abtastzeitpunkte und Testabtastzeitpunkte auf diese Zeitpunkte gelegt.

Vorteilhafterweise beträgt der Zeitabstand hierbei weniger als 100 ms, vorzugsweise weniger als 10 ms. Hierdurch wird eine ausreichende Erfassungsgeschwindigkeit und -genauigkeit gewährleistet.

In weiterer vorteilhafter Ausgestaltung können Abtastzeitpunkte und Testabtastzeitpunkte zeitlich alternieren, d.h. auf jeden Abtastzeitpunkt folgt ein Testabtastzeitpunkt und umgekehrt. Hierdurch wird eine schnelle Betätigigungszustands- und Fehlererkennung erreicht.

Ein Computerprogrammprodukt, welches direkt in den internen Speicher einer Sicherheitssteuerung geladen werden kann umfasst vorteilhafterweise Softwarecodeabschnitte, die, wenn sie auf der Sicherheitssteuerung ausgeführt werden, die Sicherheitssteuerung zum Ausführen des beschriebenen Verfahrens ertüchtigen.

Eine Sicherheitssteuerung umfasst vorteilhafterweise eine Steuereinheit mit einem Schalteingang und einem Schaltausgang, verbindbar mit einem externen Stromkreis, und ist ausgebildet zum Ausführen des beschriebenen Verfahrens und/oder umfasst vorteilhafterweise einen Speicher, in den das beschriebene Computerprogrammprodukt geladen ist.

Die mit der Erfindung erzielten Vorteile bestehen insbesondere darin, dass durch die gezielte Beschränkung der Spannungsversorgung eines externen Stromkreises einer Sicherheitssteuerung auf ein Zeitintervall um diskrete Abtastzeitpunkte herum eine erhebliche Energieersparnis im Betrieb der Sicherheitssteuerung möglich ist. Ein derartiges Verfahren ermöglicht auch in besonders einfacher Weise eine Funktions- und Fehlerprüfung des externen Stromkreises mit gezielten Austastlücken.

Ausführungsbeispiele der Erfindung werden anhand einer Zeichnung erläutert. Darin zeigen:
FIG 1 eine schematische Darstellung einer Sicherheitssteuerung,
FIG 2 eine schematische Darstellung der Sicherheitssteuerung mit einem angeschlossenen Not-Aus-Schalter,
FIG 3 eine schematische Darstellung der Sicherheitssteuerung mit einem zur Programmierung ausgerüsteten digitalen Computer, und
FIG 4-7 graphische Darstellungen dem Ausgang zugeführter Schaltsignale in verschiedenen Ausführungsformen zusammen mit den Abtast- und Testabtastzeitpunkten.

Gleiche Teile sind in allen Figuren mit denselben Bezugszeichen versehen.

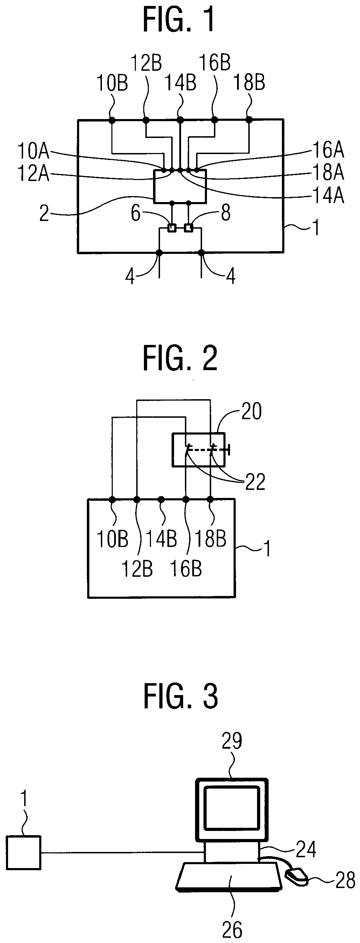

Die FIG 1 zeigt eine Sicherheitssteuerung 1 mit einer zentralen Steuereinheit 2. Die Steuereinheit 2 umfasst im Ausführungsbeispiel zwei redundant ausgelegte Mikrocontroller. Die Sicherheitssteuerung 1 hat zwei Ausgänge 4, die in die Stromzufuhr zu einem nicht näher gezeigten elektrischen Verbraucher eingeschaltet sind, der Gefahrenpotential aufweist und daher sicher ausgeschaltet werden soll. Dazu sind in die Verbindung zwischen den Ausgängen 4 zwei Relais 6, 8 in Reihe geschaltet. Um den Stromfluss zu erhalten, müssen beide Relais 6, 8 im geschlossenen Zustand sein, sie sind also redundant. Die Relais 6, 8 werden von der Steuereinheit 2 gesteuert wobei jeweils einer der Mikrocontroller eines der Relais ansteuert.

Um die Funktion des elektrischen Verbrauchers im Gefahrenfall zu unterbrechen oder zumindest sicherheitsgerichtet zu beeinflussen, sind verschiedene, beispielhaft in der folgenden FIG 2, jedoch nicht in der FIG 1 gezeigte Meldeelemente an die Sicherheitssteuerung 1 anschließbar. Diese können z.B. Not-Aus-Schalter, Lichtschranken, Türpositionsschalter etc. sein. Zum Anschluss dieser Meldeelemente weist das Sicherheitssteuerung zwei externe Schaltausgänge 10B, 12B und drei externe Schalteingänge 14B, 16B, 18B auf.

Die externen Schaltausgänge 10B, 12B sind dabei mit internen Schaltausgängen 10A, 12A der Steuereinheit 2 verbunden; die externen Schalteingänge 14B, 16B, 18B entsprechend mit internen Schalteingängen 14A, 16A, 18A der Steuereinheit 2. Dementsprechend ist der Spannungsverlauf der jeweils zugeordneten internen und externen Schalteingänge und ausgänge 10A, 10B, 12A, 12B, 14A, 14B, 16A, 16B, 18A, 18B gleich, so dass im Folgenden nur noch verallgemeinernd von Schalteingängen 14, 16, 18 und Schaltausgängen 10, 12 gesprochen wird. Das beschriebene Verfahren ist im Übrigen auch zur Prüfung interner Schaltkreise geeignet, die nicht mit externen Schalteingängen 14B, 16B, 18B oder Schaltausgängen 10B, 12B verbunden sind.

An den Schaltausgängen 10, 12 liegen durch eine kleine positive Gleichspannung dargestellte Signale an, die logischen Zuständen entsprechen. Diese werden von einer Signalerzeugungseinheit innerhalb der Steuereinheit 2 erzeugt und an die Schaltausgänge 10, 12 übergeben. Im Ausführungsbeispiel stellt eine Spannung von +24 V einen logischen Zustand 1 dar, während ein Masseschluss, d.h. eine Spannung von 0 V einen logischen Zustand 0 darstellt. Die Schaltausgänge 10, 12 können, gesteuert durch die Steuereinheit 2, in beliebiger zeitlicher Abfolge mit den den jeweiligen logischen Zuständen entsprechenden Spannungswerten beschaltet werden.

Die an den Schalteingängen 14, 16, 18 anliegenden Spannungswerte werden von der eine entsprechende Signalauswerteeinheit umfassenden Steuereinheit 2 zu einem logischen Signal ausgewertet. Da der Mikrocontroller digital arbeitet, umfasst die Signalauswerteeinheit einen Digital/Analog-Wandler. Hierfür sind gewisse Spannungsintervalle vorgegeben: So kann z.B. eine anliegende Spannung zwischen +23,5 und +24,5 V stets als logische 1, d.h. ein logischer Wahr-Wert interpretiert werden, während eine Spannung zwischen -0,5 V und +0,5 V als logische 0, d.h. logischer Falsch-Wert interpretiert wird. Liegen die anliegenden Spannungen außerhalb dieser Intervalle, wird ein Fehler ausgegeben und die Relais 6, 8 geöffnet.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 außer der Schaltein- und -ausgänge 10, 12, 14, 16, 18 verzichtet.

FIG 2 zeigt einen Not-Aus-Schalter 20, der zwei redundante Kanäle mit zwei mechanisch verbundenen Schaltern 22 umfasst. Die Schalter 22 sind äquivalent, d.h. beide im Gutzustand geschlossen und im Zustand der Anforderung der Sicherheitsfunktion geöffnet. Hier ist der Not-Aus-Schalter 20 derart mit dem Sicherheitssteuerung 1 verbunden, dass Schaltausgang 10 über den einen der Schalter 22 mit Schalteingang 16 verbunden ist, Schaltausgang 12 über den anderen der Schalter 22 mit Schalteingang 18. Schalteingang 14 bleibt unbelegt. Auf den Eingangsklemmen 14, 16, 18 ergibt sich bei Freigabe somit die Signalkombination 0, 1, 1, im Zustand der Anforderung der Sicherheitsfunktion die Signalkombination 0, 0, 0. Andere Signalkombinationen deuten auf einen Fehler hin.

Das Beispiel in den FIG 1 und 2 dient nur der Veranschaulichung der Funktionsweise der Sicherheitssteuerung 1 und ist daher stark vereinfacht. In der Realität wird das System weit komplexer sein, die Sicherheitssteuerung 1 kann modular aufgebaut sein, und es werden eine Vielzahl von Schaltein- und ausgängen vorhanden sein, die eine Vielzahl von elektrischen Verbrauchern schalten können und an die eine Vielzahl von Meldeelementen verschiedenster Art angeschlossen werden kann. Auch kann eine mehrwertige Logik verwendet werden, in der weitere Spannungswerte oder bestimmte Signalformen zur Repräsentation eines Logikwertes herangezogen werden.

Die Anschlussanordnung und damit letztlich die an den Schaltein- und - ausgängen 10, 12, 14, 16, 18 zu erwartenden Signalkombinationen müssen der Steuereinheit 2 bekannt sein, so dass sie für die jeweilige Kombination die richtige Schaltstellung für die elektrischen Verbraucher veranlasst. Dies geschieht über ein entsprechend in der Steuereinheit 2 hinterlegtes Steuerprogramm.

Die Programmierung wird in den Ausführungsbeispielen an einem digitalen Computer 24 erstellt, der in FIG 3 gezeigt ist. Der Computer 24 weist Eingabegeräte wie eine Tastatur 26 und eine Maus 28 auf sowie einen Bildschirm 29 als Ausgabegerät. Über eine serielle oder parallele Schnittstelle oder z.B. über Ethernet ist er mit der Sicherheitssteuerung 1 verbunden. Auf dem Computer 24 wird durch einen Benutzer anhand der angedachten Anschlussanordnung die Programmierung erstellt, geprüft und anschließend in die Steuereinheit 2 der Sicherheitssteuerung 1 übertragen. Alternativ könnte beispielsweise auch eine Programmierung direkt an der Sicherheitssteuerung 1 über z.B. Wahlschalter durchgeführt werden.

Im Betrieb der Sicherheitssteuerung 1 sind im Gutzustand die externen Stromkreise über Schaltausgang 10 und Schalteingang 16 bzw. Schaltausgang 12 und Schalteingang 18 geschlossen. Damit ergibt sich hier ein dauerhafter Stromfluss, der einen entsprechenden Energieverbrauch zur Folge hat. Daher wird zur Reduzierung der Energieaufnahme die +24 V Spannung nicht dauerhaft auf die Schaltausgänge 10, 12 geschaltet.

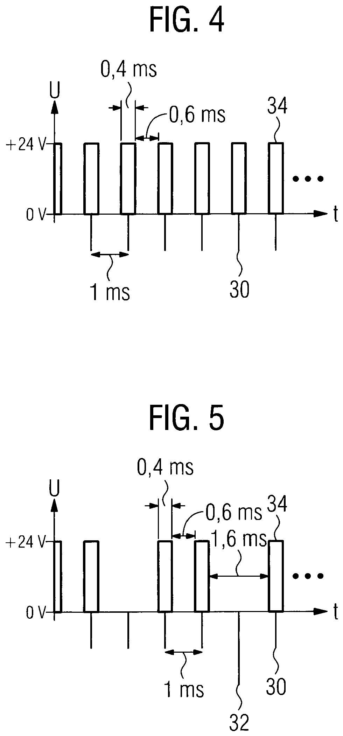

Die FIG 4-7 zeigen Signalformen, die auf den Schaltausgang 10 und den Schaltausgang 12 geschaltet werden in jeweils einem Graphen, der die Spannung U gegen die Zeit t aufträgt. Hierbei ist die Beschaltung der Schaltausgänge 10, 12 grundsätzlich natürlich völlig unabhängig voneinander, die Signalform kann sich also unterscheiden. Dabei sind Abtastzeitpunkte 30 und Testabtastzeitpunkte 32 durch von der Abszisse nach unten weisende Striche dargestellt. Abtastzeitpunkte 30 und Testabtastzeitpunkte 32 stellen Zeitpunkte dar, zu denen der Analog/Digital-Wandler im Rahmen eines Arbeitstakts der Mikroprozessoren einen Wert an einem der Schalteingänge 14, 16, 18 abnimmt, in einen logischen Wert transferiert und den Mikroprozessoren zur Verfügung stellt.

FIG 4 zeigt eine erste Signalform, die aus regelmäßigen Pulsen 34 mit einer Frequenz von einem Puls pro Millisekunde besteht. Die Pulse 34 sind rechteckförmig mit einer Höhe von +24 V und einer Breite von 0,4 ms, ihre Flanken sind somit 0,6 ms beabstandet. Die Spannung von +24 V wird also jeweils nur in Zeitintervallen von 0,4 ms abgegeben. Zwischen den Pulsen 34 wird keine Spannung angelegt.

Die Abtastzeitpunkte 30 sind aufgrund der Taktung der Mikroprozessoren im Ausführungsbeispiel ebenfalls 1 ms beabstandet. Die Pulse 34 sind dabei zeitlich so positioniert, dass sie die Abtastzeitpunkte 30 umfassen, d.h. das Zeitintervall, in dem +24 V Spannung abgegeben werden, beginnt jeweils 0,2 ms vor einem Abtastzeitpunkt 30 und endet 0,2 ms nach dem Abtastzeitpunkt 30. Hierdurch wird gewährleistet, dass zu jedem Abtastzeitpunkt 30 die erwartete Spannung von +24 V anliegt. Während 60% der Zeit liegt jedoch keine Spannung an, was die Energieaufnahme um 60% reduziert.

Die FIG 5-7 zeigen nun Ausführungsformen, in denen eine Querschlussüberwachung der externen Stromkreise vorgenommen wird. Im Ausführungsbeispiel nach der FIG 4 kann die Steuereinheit 2 nämlich nicht unterscheiden, ob die an den Schalteingängen 16, 18 aufgenommene Spannung tatsächlich von den Signalen an den Schaltausgängen 10, 12 stammt oder durch einen Querschluss oder anderen Leitungsfehler in den Stromkreis gelangt. In einem solchen Fall müsste nämlich sofort eine sicherheitsgerichtete Abschaltung des elektrischen Verbrauchers erfolgen, da die korrekte Zustandskontrolle des Not-Aus-Schalters 20 oder anderer angeschlossener Meldeelemente nicht mehr gewährleistet ist.

Hierzu ist im Ausführungsbeispiel nach der FIG 5 die Signalform modifiziert. Jeder dritte Puls 34 wird hierbei ausgelassen, d.h. im regelmäßigen 1 ms-Takt folgen zwei der bereits beschriebenen Pulse 34 von + 24 V, dann eine Auslassung von 1,6 ms mit 0 V. Dieses Muster wiederholt sich. Ebenso folgen im regelmäßigen 1 ms-Takt auf zwei Abtastzeitpunkte 30 ein Testabtastzeitpunkt 32, dargestellt durch einen in der Länge verdoppelten Strich. Dieses Muster wiederholt sich ebenso. Wiederum sind Pulse 34 und Abtastzeitpunkte 30 wie in der Ausführungsform nach FIG 4 angeordnet, die Testabtastzeitpunkte 32 fallen jedoch in die Auslassungen zwischen den Pulsen 30. Es ergibt sich somit um jeden Testabtastzeitpunkt 32 herum ein Testzeitintervall von 1,6 ms, in dem die Spannung auf 0 V reduziert ist.

Zum Testabtastzeitpunkt 32 erwartet die Steuereinheit 2 eine Spannung von 0 V am jeweils zugeordneten Schalteingang 16, 18. Liegt eine andere Spannung an, deutet dies auf einen Querschluss, d.h. einen sogenannten Stuck-At-Fehler hin. Die Steuereinheit 2 veranlasst daraufhin die entsprechenden Schritte, d.h. z.B. eine Anzeige des Fehlers und/oder eine sicherheitsgerichtete Abschaltung des Verbrauchers.

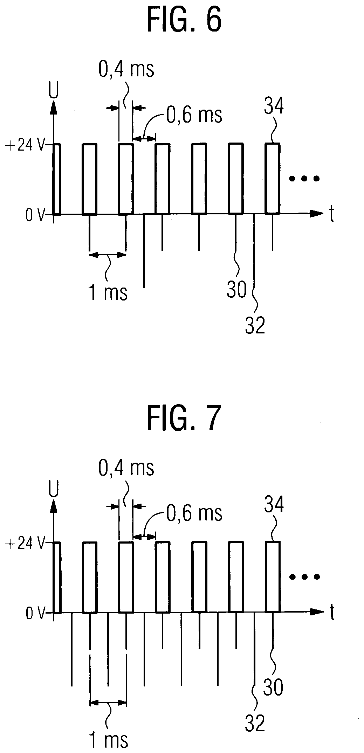

Weitere Möglichkeiten der Anordnung der Testabtastzeitpunkte 32 sind in den Ausführungsformen nach den FIG 6 und 7 gezeigt. Hier ist jeweils die Signalform gegenüber der FIG 4 nicht modifiziert, sie entspricht der Signalform der FIG 4. Ebenso ist die Anordnung der Abtastzeitpunkte 30 jeweils identisch zur FIG 4. Die Ausführungsformen nach der FIG 6 und 7 weisen jedoch im Gegensatz zur FIG 4 Testabtastzeitpunkte 32 zur Erkennung eines Querschlusses auf, die jeweils unterschiedlich angeordnet sind.

In der Ausführungsform nach der FIG 6 sind die Testabtastzeitpunkte 32 mittig zwischen benachbarten Abtastzeitpunkten 30 angeordnet, d.h. mit einem Abstand von 0,5 ms zu den benachbarten Abtastzeitpunkten 30. Die Testabtastzeitpunkte 32 sind dabei regelmäßig beabstandet mit einer Frequenz von einem Testabtastzeitpunkt pro 3 ms, so dass drei Abtastzeitpunkte 30 zwischen zwei Testabtastzeitpunkten 32 liegen. Hierbei wird ausgenutzt, dass durch die Nullspannungsphase zwischen den Pulsen 30 bereits Phasen mit der Spannung 0 V vorliegen, die zur Querschlusserkennung genutzt werden.

In der Ausführungsform nach der FIG 7 sind die Testabtastzeitpunkte 32 ebenfalls mittig zwischen benachbarten Abtastzeitpunkten 30 angeordnet, d.h. mit einem Abstand von 0,5 ms zu den benachbarten Abtastzeitpunkten 30. Die Testabtastzeitpunkte 32 sind dabei regelmäßig beabstandet mit einer Frequenz von einem Testabtastzeitpunkt pro ms, so dass zwischen zwei benachbarten Abtastzeitpunkten 30 stets ein Testabtastzeitpunkt 32 liegt. Abtastzeitpunkte 30 und Testabtastzeitpunkte 32 alternieren also im 0,5 ms Abstand.

Die Testzeitintervalle um die Testabtastzeitpunkte 32 herum entsprechen in den Ausführungsformen der FIG 6 und 7 also dem Abstand zwischen zwei Pulsen 30, betragen also 0,6 ms.

### Bezugszeichenliste

- 1: Sicherheitssteuerung
- 2: Steuereinheit
- 4: Schaltausgang
- 6,8: Relais
- 10A, 12A: interner Schaltausgang
- 10B, 12B: externer Schaltausgang
- 14A, 16A, 18A: interner Schalteingang
- 14B, 16B, 18B: externer Schalteingang
- 20: Not-Aus-Schalter
- 22: Schalter
- 24: Computer
- 26: Tastatur
- 28: Maus
- 22,24: Strompfad
- 26: Eingang
- 28: Ausgang
- 29: Bildschirm
- 30: Abstastzeitpunkt
- 32: Testabtastzeitpunkt
- 34: Puls

- U: Spannung
- t: Zeit

## Patentansprüche

1. Verfahren zur Reduzierung des Energieverbrauchs einer Sicherheitssteuerung durch Beschaltung eines Stromkreises mit einer vorgegebenen Spannung in der Sicherheitssteuerung (1) mit einer Steuereinheit (2) mit einem Schalteingang (14A, 16A, 18A) und einem Schaltausgang (10A, 12A), die mit dem Stromkreis verbunden sind, wobei die Spannung an dem Schalteingang (14A, 16A, 18A) an einer Vielzahl von Abtastzeitpunkten (30) ermittelt wird, wobei an dem Schaltausgang (10A, 12A) die vorgegebene Spannung innerhalb vorgegebener, jeweils einen der Abtastzeitpunkte (30) umschließender Zeitintervalle angelegt wird, und wobei außerhalb der Zeitintervalle eine geringere als die vorgegebene Spannung an dem Schaltausgang (10A, 12A) angelegt wird.

2. Verfahren nach Anspruch 1, bei dem außerhalb der Zeitintervalle keine Spannung an dem Schaltausgang (10A, 12A) angelegt wird.

3. Verfahren nach einem der vorhergehenden Ansprüche, bei dem der Stromkreis ein Meldeelement (20) umfasst.

4. Verfahren nach einem der vorhergehenden Ansprüche, bei dem die Zeitintervalle 70% oder weniger, vorzugsweise 40% oder weniger des mittleren Zeitabstands zwischen zwei Abtastzeitpunkten (30) betragen.

5. Verfahren nach einem der vorhergehenden Ansprüche, bei dem zu einem Testabtastzeitpunkt (32) zwischen zwei Abtastzeitpunkten (30) die Spannung an dem Schalteingang (14A, 16A, 18A) ermittelt wird, wobei innerhalb eines vorgegebenen Testzeitintervalls keine Spannung an dem Schaltausgang (10A, 12A) angelegt wird.

6. Verfahren nach Anspruch 5, bei dem aufeinanderfolgende Abtastzeitpunkte (30) oder Testabtastzeitpunkte (32) jeweils den gleichen Zeitabstand aufweisen.

7. Verfahren nach Anspruch 6, bei dem der Zeitabstand weniger als 100 ms, vorzugsweise weniger als 10 ms beträgt.

8. Verfahren nach Anspruch 6 oder 7, bei dem Abtastzeitpunkte (30) und Testabtastzeitpunkte (32) zeitlich alternieren.

9. Computerprogrammprodukt, welches direkt in den internen Speicher einer Sicherheitssteuerung (1) geladen werden kann und Softwarecodeabschnitte umfasst, die, wenn sie auf der Sicherheitssteuerung (1) ausgeführt werden, die Sicherheitssteuerung (1) zum Ausführen des Verfahrens nach einem der Ansprüche 1 bis 8 ertüchtigen.

10. Sicherheitssteuerung (1) mit einer Steuereinheit (2) mit einem Schalteingang (14A, 16A, 18A) und einem Schaltausgang (10A, 12A), verbindbar mit einem Stromkreis, ausgebildet zum Ausführen des Verfahrens nach einem der Ansprüche 1 bis 8 und/oder umfassend einen Speicher, in den das Computerprogrammprodukt nach Anspruch 9 geladen ist.

## Claims

1. Method for reducing the energy consumption of a safety controller by means of wiring a circuit having a predefined voltage in the safety controller (1) comprising a control unit (2) which has a switch input (14A, 16A, 18A) and a switch output (10A, 12A), which are connected to the circuit, wherein the voltage at the switch input (14A, 16A, 18A) is determined at a plurality of sampling instants (30), wherein the predefined voltage is applied at the switch output (10A, 12A) within predefined time intervals, each surrounding one of the sampling instants (30), and wherein a lower voltage than the predefined voltage is applied at the switch output (10A, 12A) outside of the time intervals.

2. Method according to claim 1, wherein no voltage is applied at the switch output (10A, 12A) outside of the time intervals.

3. Method according to either of the preceding claims, wherein the circuit comprises a signalling element (20).

4. Method according to any of the preceding claims, wherein the time intervals are 70% or less, preferably 40% or less, of the average time difference between two sampling instants (30).

5. Method according to any of the preceding claims, wherein the voltage at the switch input (14A, 16A, 18A) is determined at a test sampling instant (32) between two sampling instants (30), wherein no voltage is applied at the switch output (10A, 12A) within a predefined test time interval.

6. Method according to claim 5, wherein consecutive sampling instants (30) or test sampling instants (32) have the same time difference in each case.

7. Method according to claim 6, wherein the time difference is less than 100 ms, preferably less than 10 ms.

8. Method according to either claim 6 or claim 7, wherein sampling instants (30) and test sampling instants (32) temporally alternate.

9. Computer program product which can be directly loaded into the internal memory of a safety controller (1) and comprises software code segments, which, when they are executed on the safety controller (1), enable the safety controller (1) to carry out the method according to any of claims 1 to 8.

10. Safety controller (1) which comprises a control unit (2) having a switch input (14A, 16A, 18A) and a switch output (10A, 12A), which are connectable to a circuit, and is designed to carry out the method according to any of claims 1 to 8 and/or comprises a memory, in which the computer program product according to claim 9 is loaded.

## Revendications

1. Procédé destiné à réduire la consommation d'énergie d'une commande de sécurité par le câblage d'un circuit électrique avec une tension prédéfinie dans la commande de sécurité (1) avec une unité de commande (2) avec une entrée de commutation (14A, 16A, 18A) et une sortie de commutation (10A, 12A) qui sont connectées au circuit électrique, dans lequel la tension à l'entrée de commutation (14A, 16A, 18A) est déterminée à une multiplicité d'instants d'échantillonnage (30), dans lequel la tension prédéfinie est appliquée à la sortie de commutation (10A, 12A) à l'intérieur d'intervalles de temps contenant respectivement un des instants d'échantillonnage (30), et dans lequel une tension plus faible que la tension prédéfinie est appliquée à la sortie de commutation (10A, 12A) en dehors des intervalles de temps.

2. Procédé selon la revendication 1, dans lequel aucune tension n'est appliquée à la sortie de commutation (10A, 12A) en dehors des intervalles de temps.

3. Procédé selon l'une des revendications précédentes, dans lequel le circuit électrique comprend un élément de signalisation (20).

4. Procédé selon l'une des revendications précédentes, dans lequel les intervalles de temps représentent 70 % ou moins, de préférence 40 % ou moins de l'intervalle de temps moyen entre deux instants d'échantillonnage (30).

5. Procédé selon l'une des revendications précédentes, dans lequel la tension à l'entrée de commutation (14A, 16A, 18A) est déterminée à un instant d'échantillonnage test (32) entre deux instants d'échantillonnage (30), dans lequel aucune tension n'est appliquée à la sortie de commutation (10A, 12A) à l'intérieur d'un intervalle de temps test prédéfini.

6. Procédé selon la revendication 5, dans lequel des instants d'échantillonnage (30) ou instants d'échantillonnage test (32) successifs présentent respectivement le même intervalle de temps.

7. Procédé selon la revendication 6, dans lequel l'intervalle de temps est inférieur à 100 ms, de préférence inférieur à 10 ms.

8. Procédé selon la revendication 6 ou 7, dans lequel des instants d'échantillonnage (30) et des instants d'échantillonnage test (32) alternent dans le temps.

9. Produit logiciel qui peut être chargé directement dans la mémoire interne d'une commande de sécurité (1) et qui comprend des segments de code de programme qui, quand ils sont exécutés sur la commande de sécurité (1), entraînent la commande de sécurité (1) à exécuter le procédé selon l'une des revendications 1 à 8.

10. Commande de sécurité (1) avec une unité de commande (2) avec une entrée de commutation (14A, 16A, 18A) et une sortie de commutation (10A, 12A), qui peuvent être connectées à un circuit électrique, constituée pour l'exécution du procédé selon l'une des revendications 1 à 8 et/ou comprenant une mémoire dans laquelle est chargé le produit logiciel selon la revendication 9.
